(19) Europäisches Patentamt
European Patent Office
Office européen des brevets

(11) Veröffentlichungsnummer: **0 008 444**
**B1**

(12) # EUROPÄISCHE PATENTSCHRIFT

(45) Veröffentlichungstag der Patentschrift: **27.01.82**

(51) Int. Cl.³: **C 08 F 283/06,** C 08 G 18/63, C 08 F 2/32

(21) Anmeldenummer: **79103005.9**

(22) Anmeldetag: **17.08.79**

(54) **Verfahren zur Herstellung von modifizierten Polyätherpolyolen und deren Verwendung zur Herstellung von Polyurethankunststoffen.**

(30) Priorität: **24.08.78 DE 2837026**

(43) Veröffentlichungstag der Anmeldung: **05.03.80 Patentblatt 80/5**

(45) Bekanntmachung des Hinweises auf die Patenterteilung: **27.01.82 Patentblatt 82/4**

(84) Benannte Vertragsstaaten: **AT BE CH DE FR GB IT NL SE**

(56) Entgegenhaltungen:
**DE-A-1 008 081**
**DE-A-1 768 396**
**FR-A-2 256 936**

(73) Patentinhaber: **BAYER AG, Zentralbereich Patente, Marken und Lizenzen, D-5090 Leverkusen 1, Bayerwerk (DE)**

(72) Erfinder: **Alberts, Heinrich, Dr., Morgengraben 16, D-5000 Köln 80 (DE)**
Erfinder: **Ballé, Gerhard, Dr., Nietzschestrasse 14, D-5090 Leverkusen 1 (DE)**

EP 0 008 444 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zur Herstellung von modifizierten Polyätherpolyolen und deren Verwendung zur Herstellung von Polyurethankunststoffen

Durch Polymerisate oder Copolymerisate olefinisch ungesättigter Monomerer modifizierte Polyätherpolyole, die sogenannten Polymerpolyole, und ihre Verwendung zur Herstellung von Polyurethankunststoffen, insbesondere Schaumstoffen, sind bekannt. Ihre Herstellung erfolgt durch in sito-Polymerisation eines oder mehrerer Vinylmonomerer in üblichen Polyätherpolyolen (wobei die Verwendung von Acrylnitril und dessen Gemischen mit Styrol die größte technische Bedeutung erlangt hat) in Gegenwart eines radikalbildenden Polymerisationsinitiators. Herstellung und Verwendung derartiger Produkte werden z. B. in US-PS 3 304 273, US-PS 3 383 351, DE-PS 1 222 669, DE-PS 1 152 536 und DE-PS 1 152 537 beschrieben.

Polyurethane, die unter Verwendung derartiger Polymerpolyole hergestellt werden, zeichnen sich durch ein verbessertes Eigenschaftsniveau aus. Insbesondere wird die Härte und Tragfähigkeit von Polyurethan-Weichschaumstoffen günstig beeinflußt, so daß niedrigere Raumgewichte eingestellt und so Einsparungen an Rohmaterial erzielt werden können.

Darüber hinaus verleihen die Polymerpolyole Weichschaumstoffen eine größere Offenzelligkeit und wirken dadurch einer Schrumpfung der frischen Schaumstoffe bei der Lagerung entgegen. Schließlich lassen sich mit Hilfe der Polymerpolyole (bei geeigneter Auswahl des Basispolyäthers) sogenannte hochelastische, kalthärtende Schaumstoffe herstellen, wobei — im Gegensatz zu konventionellen Verfahren zur Herstellung derartiger Schaumstoffe — keine speziellen Polyisocyanate mit abgestimmter Reaktivität benötigt werden sondern marktgängige Standardprodukte, insbesondere das bei der Weichschaumherstellung überwiegend verwendete Toluylendiisocyanat, eingesetzt werden können.

Die Polymerpolyole sind im Idealfall verhältnismäßig niedrig viskose, feinteilige, nichtsedimentierende Dispersionen des Polymerisats (vorzugsweise eines Acrylnitril- bzw. Acrylnitril-Styrol-Pfropf(co)polymeren) in dem im wesentlichen unveränderten Polyätherpolyol. Kennzeichnende Merkmale für Qualität und Verarbeitbarkeit der Polymerpolyole sind Viskosität, Lagerstabilität (Sedimentationsbeständigkeit) und Teilchengröße. Diese Eigenschaften werden vor allem durch Art und Mengenverhältnisse der Ausgangsstoffe beeinflußt. Betrachtet man Monomermischungen aus Acrylnitril und Styrol sowie gegebenenfalls untergeordneten Anteilen weiterer Comonomerer, so liegt bei einem gegebenen Molekulargewicht des Basispolyäthers das Optimum der Eigenschaften des Polymerpolyols (möglichst niedrige Viskosität; Sediment- und Agglomeratfreiheit; niedrige Teilchengröße) innerhalb eines verhältnismäßig eng begrenzten Feldes von Herstellungsparametern, wobei insbesondere der Monomeranteil im Ansatz und das Monomerenverhältnis großen Einfluß auf die Produktqualität ausüben. Viskosität, Teilchengröße und Agglomeratanteil durchlaufen von einem reines Acrylnitril enthaltenden Polymerisationsansatz ausgehend, mit zunehmendem Styrolanteil des Ansatzes ein Minimum und steigen mit zunehmender Gesamtmenge an Monomerem, bezogen auf Basispolyäther, stark an. Die genannten Größen nehmen aber auch bei abnehmendem Molekulargewicht des Ausgangsproduktes, sowie bei Abnahme der Polymerisationstemperatur unter 100°C zu.

Die Stabilisierung der Polymerpolyol-Dispersionen gegenüber Sedimentation wird durch den Einbau eines Teils der Moleküle des Basispolyäthers in das in situ gebildete Polymere bewirkt. Es ist daher anzunehmen, daß die Reaktionsbedingungen die Pfropfhäufigkeit beeinflussen, so daß nur im Optimum des Parameterfeldes eine maximale Pfropfhäufigkeit erzielt wird, welche die Lagerstabilität und Verarbeitbarkeit des Produkts gewährleistet. Arbeitet man außerhalb der Grenzen dieses Feldes von Parametern, so sind erhöhte Viskosität und Teilchenvergröberung im Polymerpolyol bis hin zu Agglomeration und Sedimentation die Folge. Ebenso führt die Verwendung von Polyäthern mit niedriger Kettenlänge (Äquivalentgewicht $< 1000$) zu hochviskosen, grobteiligen Suspensionen.

Der bisher bekannten Literatur ist keine technische Lehre zu entnehmen, wie diese Beschränkungen, denen das Verfahren zur Herstellung von Polymerpolyolen unterliegt, zu überwinden sind und wie man auch bei hinsichtlich Viskosität und Teilchengröße kritischen Ansätzen die Produkteigenschaften verbessern könnte.

Erwünscht wäre es z. B., unabhängig vom Molekulargewicht des Ausgangspolyäthers einen höheren Feststoffgehalt einzustellen, um die eigenschaftsverbessernde Wirkung des Polymerpolyols noch zu verstärken bzw. um dem Verarbeiter die Möglichkeit zu geben, das Produkt mit anderen Polyolen zu verschneiden und so den Anforderungen an die Eigenschaften seiner Polyurethanschaumstoffe anzupassen. Dabei darf aber die Verarbeitbarkeit des Produkts nicht beeinträchtigt werden, d. h. die Viskosität und Teilchengröße dürfen nicht zu stark ansteigen.

Es ist bereits vorgschlagen worden, bei der in situ-Polymerisation übliche Molekulargewichtsregler und Telogene mitzuverwenden, um die Viskosität von Polymerpolyolen in kritischen Ansätzen zu erniedrigen. Dieses Vorgehen führte bisher deshalb nicht zum Ziel, da diese Substanzen, z. B. die in der Polymerisationstechnik üblichen Mercaptane, als Überträger mit hoher Übertragungskonstante in Konkurrenz zum Polyätherpolyol treten und die Pfropfausbeute eher verringert wird. Eine Verbesserung der Produktqualität ist zwar in gewissem Umfang durch Erhöhung der Initiatorkonzentration möglich; diesem Verfahren sind jedoch Grenzen gesetzt.

Erhöhte Peroxidzusätze bringen die Gefahr eines oxidativen Angriffs auf den Polyäther mit sich. Dadurch werden Abbau- und Vernetzungsreaktionen begünstigt; dabei gebildete Nebenprodukte können bei der Herstellung von Schaumstoffen zu Kernverfärbungen führen. Aus dem technisch mit gutem Erfolg verwendeten Azoisobutyronitril (AIBN) entsteht beim thermischen Zerfall ein toxisches Nebenprodukt, weshalb auch in diesem Fall die Initiatorkonzentration möglichst niedrig gehalten werden sollte.

In Gestalt der Enoläther mit der allgemeinen Formel

$$A = CH - X - R$$

in welcher

A für den zweiwertigen Rest

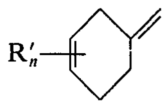 oder 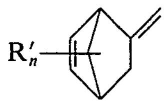

steht,

R $C_{1-18}$-Alkyl-, $C_{5-10}$-Cycloalkyl- oder gegebenenfalls am Kern substituierter Benzylrest, vorzugsweise einen $C_{1-8}$-Alkyl-, Cyclohexyl-, Cyclohexylmethyl- oder Benzylrest,

R′ $C_{1-8}$-Alkylrest, vorzugsweise einen Methylrest,

n 0, 1 oder 2 und

X $-O-$ oder $-S-$ bedeutet,

wurden nun wirksame Überträger gefunden, die auch bei höheren Feststoffgehalten eine relativ niedrige Viskosität des Polymerpolyols bewirken und die Teilchenagglomeration verhindern, ohne die Lagerstabilität zu beeinträchtigen. Bei Mitverwendung dieser Verbindungen im Polymerisationsansatz lassen sich gut verarbeitbare, agglomeratfreie Dispersionen mit Polymeranteilen bis zu 50% auch dann herstellen, wenn man von Monomermischungen mit hohem Styrolanteil ausgeht. Es können darüber hinaus auch Polyäther mit einem Äquivalentgewicht $\geq$ 1000 mit Erfolg als Basispolyole eingesetzt werden.

Gegenstand der Erfindung ist somit ein Verfahren zur Herstellung von modifizierten Polyätherpolyolen durch radikalische Polymerisation von 1 bis 50 Gewichtsteilen, vorzugsweise 10 bis 40 Gewichtsteilen, eines Gemisches aus 20—100 Gewichtsprozent, vorzugsweise 40—80 Gew.-% (bezogen auf Gesamtmenge an Monomeren), Acrylnitril und 0—80 Gew.-%, vorzugsweise 20—60 Gew.-%, Styrol in 50—99 Gew.-Teilen, vorzugsweise 60—90 Gew.-Teilen, eines Polyätherpolyols in Gegenwart eines Radikale liefernden Polymerisationsinitiators, welches dadurch gekennzeichnet ist, daß man die Polymerisation in Gegenwart von 0,1—1,5 Gew.-%, bezogen auf die eingesetzten Monomeren, einer Verbindung der allgemeinen Strukturformel

$$A = CH - X - R$$

durchgeführt, worin

A einen der zweiwertigen Reste

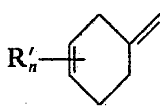 oder 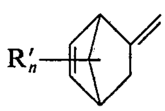

bedeutet,

R für einen $C_{1-18}$-Alkyl-, Cycloalkyl- oder gegebenenfalls substituierten Benzylrest,

R′ für einen $C_{1-8}$-Alkylrest,

n für 0, 1 oder 2 und

X für $-O-$ oder $-S-$ stehen.

Die erfindungsgemäß zuzusetzenden Verbindungen sind literaturbekannt; ihre Herstellung ist z. B. in den Deutschen Auslegeschriften 1 668 091 und 1 768 396 beschrieben. Erfindungsgemäß geeignete Enoläther sind unter anderem jene der folgenden Strukturformeln, die jedoch nur als Beispiele für die große Klasse der erfindungsgemäß verwendbaren Produkte stehen sollen.

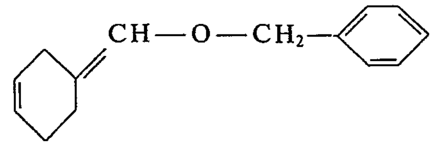

(I)

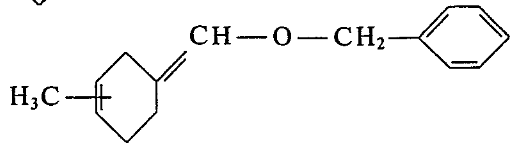

(II)

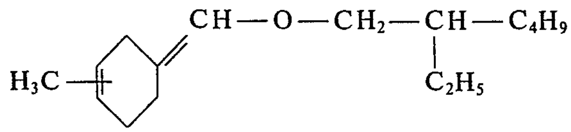

(III)

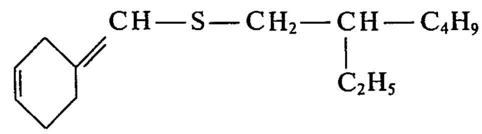

(IV)

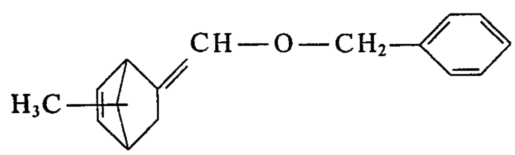

(V)

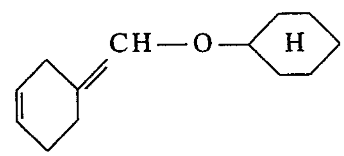

(VI)

Die Enoläther werden erfindungsgemäß in Mengen von 0,1—1,5 Gew.-%, vorzugsweise 0,5—1,2 Gew.-%, bezogen auf die eingesetzten Monomeren, verwendet.

Die für die erfindungsgemäße in situ-Pfropfpolymerisation geeigneten Monomeren sind im wesentlichen Acrylnitril und seine Mischungen mit Styrol im Verhältnis von 100 : 0 bis 20 : 80, vorzugsweise von 80 : 20 bis 40 : 60 Gewichtsteilen. Daneben können in untergeordneten Mengen weitere copolymerisierbare Comonomere mitverwendet werden, z. B. Ester ungesättigter Mono- und Dicarbonsäuren wie Acrylsäure, Methacrylsäure, Maleinsäure, Fumarsäure oder Itaconsäure mit niederen Alkoholen mit 1—8 C-Atomen, Mono- oder Diester der genannten Carbonsäuren mit Glykolen, Polyglykolen oder höherwertigen Alkoholen, ferner Vinylacetat, Vinylchlorid, Vinylidenchlorid, Methacrylnitril, Acrylamid, Methacrylamid, Ester der genannten ungesättigten Carbonsäuren mit Aminoalkoholen, z. B. 2-N,N-Dimethylaminoäthylmethacrylat, ferner Ester der Vinylphosphonsäure, z. B. Vinylphosphonsäuredimethylester.

Polyätherpolyole, die als Ausgangsmaterialien für das erfindungsgemäße Verfahren verwendet werden können, sind die an sich bekannten Additionsprodukte von cyclischen Äthern wie Äthylenoxid, Propylenoxid, Epichlorhydrin, Styroloxid, 1.2-Butylenoxid oder/und Tetrahydrofuran an Starterverbindungen mit mindestens zwei Zerewitinoff-aktiven Wasserstoffatomen im Molekül, wie sie z. B. in dem Buch »Polyurethanes, Chemistry and Technology«, Teil I, S. 32 ff. von J. H. Saunders und K. C. Frisch beschrieben sind. Geeignete Starterverbindungen sind z. B. Polyhydroxylverbindungen wie Alkylenglykole, Glycerin, Trimethylolpropan, Pentaerythrit, Sorbit, Glucose, Glucoside, Saccharose sowie die durch Kondensation von Formaldehyd zugänglichen Polyhydroxylverbindungen (Formose bzw. Formit), ferner Wasser, Ammoniak, Aminoalkohole wie Äthanolamin, Diäthanolamin oder Triäthanolamin und schließlich primäre oder/und sekundäre Amine oder Polyamine wie Äthylendiamin oder Anilin. Die als Ausgangsmaterialien für die Polymerpolyol-Herstellung dienenden Polyätherpolyole haben bevorzugt Äquivalentgewichte von 100 bis 3000 und eine Hydroxylfunktionalität von 2—8. Die Polyätherketten sind gewöhnlich aus Propylenoxid- und Äthylenoxidbausteinen aufgebaut. Die Äthylenoxideinheiten können statistisch entlang der Kette oder in zusammenhängenden Blöcken innerhalb oder/und am Ende der Kette angeordnet sein. Im letzteren Fall entstehen besonders reaktive Polyätherpolyole mit hohem Anteil an primären OH-Gruppen, welche als Ausgangsmaterial zur Herstellung der hochelastischen, kalthärtenden Weichschaumstoffe besonders geeignet sind.

Die Initiierung der radikalischen Polymerisation kann mit den üblichen radikalbildenden Initiatoren erfolgen. Dabei ist es erwünscht, daß ihre Zerfallsgeschwindigkeit möglichst hoch ist, d. h., die

Halbwertszeit des thermischen Zerfalls sollte bei den Polymerisationsbedingungen möglichst niedrig sein, damit im Reaktionsmedium ständig ein ausreichendes Radikalangebot vorliegt. Derartige Initiatoren sind z. B. die organischen Peroxide wie Benzoylperoxid oder Lauroylperoxid, und insbesondere die Percarbonsäureester wie tert.-Butylperoctoat und tert.-Butylperpivalat und ferner aliphatische Azoverbindungen. Azoisobutyronitril besitzt die größte technische Bedeutung und ist für die Herstellung von Polymerpolyolen aus verschiedenen Gründen ein besonders gut geeigneter Initiator. Vorzugsweise werden 0,3 bis 2 Gew.-%, bezogen auf die Gesamtmenge an Monomeren, des Initiators eingesetzt.

Die Durchführung des erfindungsgemäßen Verfahrens kann diskontinuierlich oder kontinuierlich erfolgen. Man kann z. B. eine Mischung, die das oder die Monomeren, den Initiator, den Überträger und gegebenenfalls einen Teil des einzusetzenden Polyäthers enthält, in den in einem mit Rührwerk ausgestatteten Reaktor auf die Polymerisationstemperatur vorerhitzten Polyäther eindosieren, oder aber eine Mischung aller Reaktionsteilnehmer kontinuierlich in einen Reaktor einpumpen und das Produkt im gleichen Maße durch einen Überlauf entnehmen.

Die Temperatur, bei der die Polymerisation durchgeführt wird, soll mindestens 100° C betragen, vorzugsweise arbeitet man bei 120—130° C. Dabei kann die Reaktion in einem gegen den Außendruck abgeschlossenen System unter dem sich bei der gewählten Temperatur einstellenden Druck oder im offenen System unter Normaldruck ablaufen. Zweckmäßig verdrängt man den Luftsauerstoff aus der ganzen Apparatur durch Spülen mit einem Inertgas wie Stickstoff oder Argon und erhält während des Prozesses ständig eine Inertgasatmosphäre im System aufrecht. Das Produkt wird in üblicher Weise durch Vakuumdestillation, gegebenenfalls in einem Dünnschicht- oder Fallfilmverdampfer, von flüchtigen Anteilen, insbesondere den Restmonomeren, befreit.

Die nach dem erfindungsgemäßen Verfahren hergestellten Polymerpolyole sind zur Herstellung von Polyurethankunststoffen aller Art, vor allem von weichen und halbharten Polyurethanschaumstoffen, nach den bekannten Verfahren geeignet. Sie sind frei von grobteiligen, filtrierbaren und sedimentierenden Anteilen und zeigen eine wesentlich niedrigere Viskosität als die nach konventionellen Verfahren hergestellten analogen Produkte. Ein weiterer Vorteil besteht darin, daß die erfindungsgemäßen Überträgersubstanzen, die nach der Fertigstellung im Produkt verbleiben, wertvolle, nicht verfärbende Antioxidantien darstellen, welche sowohl das Polymerpolyol selbst als auch den daraus hergestellten Polyurethanschaumstoff vor oxidativen Angriffen schützen.

Die Verfahren zur Herstellung von Polyurethankunststoffen unter Verwendung von Polymerpolyolen und die dabei erzielbaren technischen Verbesserungen sind an sich bekannt. Im Vordergrund des Interesses stehen die weichen elastischen und hochelastischen sowie die halbharten Schaumstoffe, denen die Polymerpolyole eine verbesserte Härte und Tragfähigkeit bei günstiger Härte/Raumgewichts-Relation verleihen. Auch andere Schaumstoffeigenschaften werden positiv beeinflußt, etwa die Offenzelligkeit und Schrumpffreiheit von Weichschaumstoffen. Für die maschinelle Verarbeitung der Polymerpolyole sind Agglomeratfreiheit und möglichst niedrige Viskosität wesentliche Voraussetzungen. Die übliche Dosierung mit Kolbenpumpenaggregaten setzt der Viskosität des geförderten Materials eine Obergrenze von ca. 1500—2000 mPa.s, die auch von den Polymerpolyole enthaltenden Formulierungen unterschritten werden muß.

Gegenstand der Erfindung ist auch ein Verfahren zur Herstellung von gegebenenfalls zellförmigen Polyurethankunststoffen durch Umsetzung von

A) Polyisocyanaten mit
B) durch Pfropfpolymerisation modifizierten Polyätherpolyolen sowie gegebenenfalls
C) weiteren höhermolekularen und/oder niedermolekularen, gegenüber Isocyanaten reaktive Wasserstoffatome enthaltenden Verbindungen, gegebenenfalls in Gegenwart von
D) Treibmitteln, Katalysatoren und weiteren an sich bekannten Zusatzstoffen,

welches dadurch gekennzeichnet ist, daß als Komponente B) die erfindungsgemäß zugänglichen Polymerpolyole eingesetzt werden.

Für die Durchführung des erfindungsgemäßen Verfahrens werden eingesetzt:

1. Als Ausgangskomponenten aliphatische, cycloaliphatische, araliphatische, aromatische und heterocyclische Polyisocyanate, wie sie z. B. von W. Siefken in Justus Liebigs Annalen der Chemie, 562, Seiten 75 bis 136, beschrieben werden, beispielsweise solche der Formel

$$Q\,(NCO)_n$$

in der
n 2—4, vorzugsweise 2, und
Q einen aliphatischen Kohlenwasserstoffrest mit 2—18, vorzugsweise 6—10 C-Atomen,
einen cycloaliphatischen Kohlenwasserstoffrest mit 4—15, vorzugsweise 5—10 C-Atomen,
einen aromatischen Kohlenwasserstoffrest mit 6—15, vorzugsweise 6—13 C-Atomen,

oder einen araliphatischen Kohlenwasserstoffrest mit 8—15, vorzugsweise 8—13 C-Atomen, bedeuten, z. B. Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/und -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, sowie Naphthylen-1,5-diisocyanat.

Ferner kommen beispielsweise erfindungsgemäß in Frage: Triphenylmethan-4,4',4''-triisocyanat, Polyphenyl-polymethylenpolyisocyanate, wie sie durch Anilin-Formaldehyd-Kondensation und anschließende Phosgenierung erhalten und z. B. in den GB-Patentschriften 874 430 und 848 671 beschrieben werden, m- und p-Isocyanatophenylsulfonyl-isocyanate gemäß der US-Patentschrift 3 454 606, perchlorierte Arylpolyisocyanate, wie sie z. B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäß US-Patentschrift 3 492 330, Allophanatgruppen aufweisende Polyisocyanate, wie sie z. B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z. B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z. B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z. B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z. B. in der US-Patentschrift 36 54 106 beschrieben werden, Estergruppen aufweisende Polyisocyanate, wie sie z. B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z. B. das 2,4- und 2,6-Toluylendiisocyanat sowie beliebige Gemische dieser Isomeren (»TDI«), Polyphenyl-polymethylen-polyisocyanate, wie sie durch Anilin-Formaldehyd-Kondensation und anschließende Phosgenierung hergestellt werden (»rohes MDI«) und Carbodiimidgruppen, Urethangruppen, Allophanatgruppen, Isocyanuratgruppen, Harnstoffgruppen oder Biuretgruppen aufweisenden Polyisocyanate (»modifizierte Polyisocyanate«), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

2. Als Ausgangskomponenten ferner gegebenenfalls Verbindungen mit mindestens zwei gegenüber Isocyanaten reaktionsfähigen Wasserstoffatomen von einem Molekulargewicht in der Regel von 400—10 000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 400 bis 7000, vorzugsweise 1000 bis 5000, z. B. mindestens zwei, in der Regel 2 bis 8, vorzugsweise aber 2 bis 4, Hydroxylgruppen aufweisende Polyester, Polyäther, Polythioäther, Polyacetale, Polycarbonate und Polyesteramide, wie sie für die Herstellung von homogenen und von zellförmigen Polyurethanen an sich bekannt sind.

Vertreter der genannten erfindungsgemäß gegebenenfalls zu verwendenden Verbindungen sind z. B. in High Polymers, Vol. XVI, »Polyurethanes, Chemistry and Technology«, verfaßt von Saunders-Frisch, Interscience Publishers, New York, London, Band I, 1962, Seiten 32—42 und Seiten 44—54 und Band II, 1964, Seiten 5—6 und 198—199, sowie im Kunststoff-Handbuch, Band VII, Vieweg-Höchtlen, Carl-Hanser-Verlag, München, 1966, z. B. auf den Seiten 45—71, beschrieben. Selbstverständlich können Mischungen der obengenannten Verbindungen mit mindestens zwei gegenüber Isocyanaten reaktionsfähigen Wasserstoffatomen mit einem Molekulargewicht von 400—10 000, z. B. Mischungen von Polyäthern und Polyestern, eingesetzt werden.

Von besonderem Vorteil ist es dabei in manchen Fällen, niedrigschmelzende und hochschmelzende Polyhydroxylverbindungen miteinander zu kombinieren (DE-Offenlegungsschrift 2 706 297).

3. Gegebenenfalls können als Ausgangskomponenten Verbindungen mit mindestens zwei gegenüber Isocyanaten reaktionsfähigen Wasserstoffatomen und einem Molekulargewicht von 32 bis 400 mitverwendet werden. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen seien genannt:

Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glyzerin, Trimethylolpropan, Hexantriol-(1,2,6), Trimethyloläthan, Pentaerythrit, Chinit, Mannit und Sorbit, Ricinusöl, Diäthylenglykol, Triäthylenglykol, Tetraäthylenglykol, höhere Polyäthylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxy-diphenylpropan, Di-hydroxymethyl-hydrochinon, Äthanolamin, Diäthanolamin, N-Methyldiäthanolamin, Triäthanolamin und 3-Aminopropanol.

Als niedermolekulare Polyole kommen erfindungsgemäß auch die Gemische von Hydroxyaldehyden und Hydroxyketonen (»Formose«) bzw. die hieraus durch Reduktion erhaltenen mehrwertigen Alkohole (»Formit«) in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombinationen mit Aminoplastbildnern und/oder Phosphiten ein (DE-Offenlegungsschriften 2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäß als Polyolkomponente in Betracht (DE-Offenlegungsschrift 2 638 759).

Erfindungsgemäß geeignete aliphatische Diamine sind beispielsweise Äthylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan (»Isophorondiamin«), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE-Offenlegungsschrift 2 638 731) und cycloaliphatische Triamine gemäß DE-Offenlegungsschrift 2 614 244. Auch Hydrazin und substituierte Hydrazine, z. B. Methylhydrazin, N,N'-Dimethylhydrazin und deren Homologe sowie Säuredihydrazide kommen erfindungsgemäß in Betracht, z. B. Carbodihydrazid, Oxalsäuredihydrazid, die Dihydrazide von Malonsäure, Bernsteinsäure, Glutarsäure, Adipinsäure, β-Methyladipinsäure, Sebazinsäure, Hydracrylsäure und Terephthalsäure; Semicarbazido-alkylen-hydrazide wie z. B. β-Semicarbazidopropionsäurehydrazid (DE-Offenlegungsschrift 1 770 591), Semicarbazido-alkylencarbazinester wie z. B. 2-Semicarbazidoäthyl-carbazinester (DE-Offenlegungsschrift 1 918 504) oder auch Amino-semicarbazid-Verbindungen wie z. B. β-Aminoäthyl-semicarbazido-carbonat (DE-Offenlegungsschrift 1 902 931). Zur Steuerung ihrer Reaktivität können die Aminogruppen ganz oder teilweise durch Aldimin- bzw. Ketimin-Gruppen blockiert sein (US-Patentschrift 3 734 894; DE-Offenlegungsschrift 2 637 115).

Als Beispiele für aromatische Diamine seien Bisanthranilsäureester gemäß den DE-Offenlegungsschriften 2 040 644 und 2 160 590, 3,5- und 2,4-Diaminobenzoesäureester gemäß DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Äthergruppen aufweisenden Diamine gemäß DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3'-Dichlor-4,4'-diamino-diphenylmethan, Toluylendiamin, 4,4'-Diaminodiphenylmethan, 4,4'-Diaminodiphenyldisulfide (DE-Offenlegungsschrift 2 404 976), Diaminodiphenyldithioäther (DE-Offenlegungsschrift 2 509 404), durch Alkylthiogruppen substituierte aromatische Diamine (DE-Offenlegungsschrift 2 638 760), Diaminobenzolphosphonsäureester (DE-Offenlegungsschrift 2 459 491), Sulfonat- oder Carboxylatgruppen enthaltende aromatische Diamine (DE-Offenlegungsschrift 2 720 166) sowie die in der DE-Offenlegungsschrift 2 635 400 aufgeführten hochschmelzenden Diamine genannt. Beispiele für aliphatisch-aromatische Diamine sind die Aminoalkylthioaniline gemäß DE-Offenlegungsschrift 2 734 574.

Als Kettenverlängerungsmittel können erfindungsgemäß auch Verbindungen wie 1-Mercapto-3-aminopropan, gegebenenfalls substituierte Aminosäuren, z. B. Glycin, Alanin, Valin, Serin und Lysin sowie gegebenenfalls substituierte Dicarbonsäuren, beispielsweise Bernsteinsäure, Adipinsäure, Phthalsäure, 4-Hydroxyphthalsäure und 4-Aminophthalsäure verwendet werden.

Ferner können gegenüber Isocyanaten monofunktionelle Verbindungen in Anteilen von 0,01 bis 10 Gew.-%, bezogen auf Polyurethanfeststoff, als sogenannte Kettenabbrecher mitverwendet werden. Derartige monofunktionelle Verbindungen sind z. B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Äthylhexanol, Octanol, Dodecanol, die verschiedenen Amylalkohole, Cyclohexanol, Äthylenglykolmonoäthyläther.

4. Gegebenenfalls als Hilfs- und Zusatzmittel:

a) Wasser und/oder leicht flüchtige anorganische oder organische Substanzen als Treibmittel. Als organische Treibmittel kommen z. B. Aceton, Äthylacetat, halogensubstituierte Alkane wie Methylenchlorid, Chloroform, Äthylidenchlorid, Vinylidenchlorid, Monofluortrichlormethan, Chlordifluormethan, Dichlordifluormethan, ferner Butan, Hexan, Heptan oder Diäthyläther, als anorganische Treibmittel z. B. Luft. $CO_2$ oder $N_2O$, in Frage. Eine Treibwirkung kann auch durch Zusatz von bei Temperaturen über Raumtemperatur unter Abspaltung von Gasen, beispielsweise von Stickstoff, sich zersetzenden Verbindungen, z. B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München, 1966, z. B. auf den Seiten 108 und 109, 453 bis 455 und 507 bis 510, beschrieben.

b) Katalysatoren der an sich bekannten Art, z. B. tertiäre Amine, wie Triäthylamin, Tributylamin, N-Methyl-morpholin, N-Äthyl-morpholin, N,N,N',N'-Tetramethyl-äthylendiamin, Pentamethyldiäthylentriamin und höhere Homologe (DE-Offenlegungsschriften 2 624 527 und 2 624 528), 1,4-Diazabicyclo-(2,2,2)-octan, N-Methyl-N'-dimethylaminoäthylpiperazin, Bis-(dimethylaminoalkyl)-piperazine (DE-Offenlegungsschrift 2 636 787), N,N-Dimethylbenzylamin, N,N'-Dimethylcyclohexylamin, N,N'-Diäthylbenzylamin, Bis-(N,N-diäthylaminoäthyl)-adipat, N,N,N',N'-Tetramethyl-1,3-butandiamin, N,N-Dimethyl-$\beta$-phenyläthylamin, 1,2-Dimethylimidazol, 2-Methylimidazol, monocyclische und bicyclische Amidine (DE-Offenlegungsschrift 1 720 633), Bis-(dialkylamino)alkyl-äther (US-Patentschrift 3 330 782, DE-Auslegeschrift 1 030 558, DE-Offenlegungsschriften 1 804 361 und 2 618 280) sowie Amidgruppen (vorzugsweise Formamidgruppen) aufweisende tertiäre Amine gemäß den DE-Offenlegungsschriften 2 523 633 und 2 732 292). Als Katalysatoren kommen auch an sich bekannte Mannichbasen aus sekundären Amine, wie Dimethylamin, und Aldehyden, vorzugweise Formaldehyd, oder Ketonen wie Aceton, Methyläthylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z. B. Triäthanolamin, Triisopropanolamin, N-Methyl-diäthanolamin, N-Äthyl-diäthanolamin, N,N-Dimethyl-äthanolamin, deren Umsetzungsprodukte mit Alkylenoxiden wie Propylenoxid und/oder Äthylenoxid sowie sekundär-tertiäre Amine gemäß DE-Offenlegungsschrift 2 732 292.

Als Katalysatoren kommen ferner Silaamine mit Kohlenstoff-Silizium-Bindungen, wie sie z. B. in der DE-Patentschrift 1 229 290 (entsprechend der US-Patentschrift 3 620 984) beschrieben sind, in Frage, z. B. 2,2,4-Trimethyl-2-silamorpholin und 1,3-Diäthylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-Offenlegungsschrift 1 769 043).

Die Reaktion zwischen NCO-Gruppen und Zerewitinoff-aktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenlegungsschriften 2 062 288, 2 062 289, 2 117 576 (US-Patentschrift 3 758 444), 2 129 198, 2 330 175 und 2 330 211 beschrieben.

Erfindungsgemäß können auch organische Metallverbindungen, insbesondere organische Zinnverbindungen, als Katalysatoren, verwendet werden. Als organische Zinnverbindungen kommen neben schwefelhaltigen Verbindungen wie Di-n-octyl-zinn-mercaptid (DE-Auslegeschrift 1 769 367; US-Patentschrift 3 645 927) vorzugsweise Zinn(II)-salze von Carbonsäuren wie Zinn(II)-acetat, Zinn(II)-octoat, Zinn(II)-äthylhexoat und Zinn(II)-laurat und die Zinn(IV)-Verbindungen, z. B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München, 1966, z. B. auf den Seiten 96 bis 102,

beschrieben.
Die Katalysatoren werden in der Regel in einer Menge zwischen etwa 0,001 und 10 Gew.-%, bezogen auf die Gesamtmenge an Verbindungen mit mindestens zwei gegenüber Isocyanaten reaktionsfähigen Wasserstoffatomen, eingesetzt.

c) Oberflächenaktive Zusatzstoffe, wie Emulgatoren und Schaumstabilisatoren. Als Emulgatoren kommen z. B. die Natriumsalze von Ricinusöl-sulfonaten oder Salze von Fettsäuren mit Aminen wie ölsaures Diäthylamin oder stearinsaures Diäthanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden.
Als Schaumstabilisatoren kommen vor allem Polyäthersiloxane, speziell wasserlösliche Vertreter, in Frage. Diese Verbindungen sind im allgemeinen so aufgebaut, daß ein Copolymerisat aus Äthylenoxid und Propylenoxid mit einem Polydimethylsiloxanrest verbunden ist. Derartige Schaumstabilisatoren sind z. B. in den US-Patentschriften 2 834 748, 2 917 480 und 3 629 308 beschrieben. Von besonderem Interesse sind vielfach über Allophanatgruppen verzweigte Polysiloxan-Polyoxyalkylen-Copolymere gemäß DE-Offenlegungsschrift 2 558 523.

d) Reaktionsverzögerer, z. B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z. B. Tris-chloräthylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.
Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München, 1966, z. B. auf den Seiten 103 bis 113 beschrieben.

Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z. B. solcher, die in der US-Patentschrift 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München, 1966, z. B. auf den Seiten 121 bis 205 beschrieben.
Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z. B. Aluminium, oder Kunststoff, z. B. Epoxidharz, in Frage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist, sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter »overcharging« gearbeitet; eine derartige Verfahrensweise ist z. B. aus den US-Patentschriften 3 178 490 und 3 182 104 bekannt.
Bei der Formverschäumung werden vielfach an sich bekannte »äußere Trennmittel«, wie Siliconöle, mitverwendet. Man kann aber auch sogenannte »innere Trennmittel«, gegebenenfalls im Gemisch mit äußeren Trennmitteln, verwenden, wie sie z. B. aus den DE-Offenlegungsschriften 2 121 670 und 2 307 589 bekanntgeworden sind.
Erfindungsgemäß lassen sich auch kalthärtende Schaumstoffe herstellen (vgl. GB-Patentschrift 1 162 517, DE-Offenlegungsschrift 2 153 086).
Selbstverständlich können aber auch Schaumstoffe durch Blockverschäumung oder nach dem an sich bekannten Doppeltransportbandverfahren hergestellt werden.

Die folgenden Beispiele erläutern die erfindungsgemäßen Verfahren. Wenn nicht anders vermerkt, sind Mengenangaben als Gewichtsteile bzw. Gewichtsprozente zu verstehen.
Die in den Beispielen verwendeten Polyätherpolyole werden in folgender Weise bezeichnet:

Polyol A: Auf Trimethylolpropan gestartetes Polyoxypropylentriol, das 17 Gew.-% an endständigen Polyoxyäthylenblöcken enthält und einen Gehalt an primären OH-Gruppen von mehr als 70 Gew.-%, bezogen auf den Gesamthydroxylgehalt, sowie eine OH-Zahl von 35 aufweist.
Polyol B: Auf Trimethylolpropan gestartetes Polyoxypropylentriol mit einer OH-Zahl von ca. 56, das überwiegend sekundäre endständige OH-Gruppen enthält.
Polyol C: Lineares Polypropylenglykol vom Molekulargewicht 2000.
Polyol D: Lineares Polypropylenglykol vom Molekulargewicht 1000.
Polyol E: Additionsprodukt von Propylenoxid an Trimethylolpropan mit einer Hydroxylzahl von ca. 550 und einem mittleren Molekulargewicht von ca. 300.

AIBN ist die Abkürzung für Azoisobutyronitril, da als Initiator verwendet wird.

## Beispiel 1

### a) Verfahren nach dem Stand der Technik

200 g des Polyols A wurden in einem mit Tropftrichter, Rückflußkühler, Gaseinleitungsrohr und wirksamem Rührer ausgestatteten Kolben mittels eines beheizten Ölbades unter Stickstoff auf 120°C erhitzt. Eine Mischung aus 400 g des gleichen Polyols, 240 g Acrylnitril, 160 g Styrol und 2,0 g AIBN (0,5%, bezogen auf Monomere) wurde durch den Tropftrichter innerhalb von 2,5 Stunden eindosiert, wobei die Temperatur durch Steuerung des Heizbades und der Dosiergeschwindigkeit im Bereich von 120–130°C gehalten wurde. Weitere 2 Stunden lang wurde der Ansatz bei 120°C nachgerührt und schließlich zur Entfernung der Restmonomeren bei einem Vakuum von 14 Torr gestrippt. Die Destillation lieferte 18 g Destillat, entsprechend einem Monomerumsatz von 95,5% und einem Feststoffgehalt von 38,9%. Das Produkt war eine relativ feinteilige, aber von zahlreichen gröberen Stippen durchsetzte Dispersion mit einer Viskosität von 10 000 mPa · s, gemessen mit dem Haake-Viskotester, Spindel Nr. 1, bei 23°C. Nach einigen Wochen war ein Teil des Feststoffs bereits sedimentiert.

### b) Erfindungsgemäßes Verfahren

Versuch a) wurde mit dem Unterschied wiederholt, daß die eindosierte Mischung zusätzlich 0,4 g der Verbindung I (0,1%, bezogen auf Monomere) enthielt. Dabei entstand eine feinteilige, koagulatfreie Dispersion mit einer Viskosität von 3750 mPa · s. Die Vakuumdestillation ergab 13,5 g Destillat, entsprechend einem Monomerumsatz von 96,6% und einem Polymergehalt von 39,2%. Die Dispersion war sedimentationsstabil und ließ sich rückstandsfrei durch eine Perlongaze mit einer Maschenweite von ca. 150 µm filtrieren.

## Beispiel 2

Dieses Beispiel zeigt die Wirkung eines erfindungsgemäßen Pfropfüberträgers bei der Pfropfung auf ein Polyoxypropylentriol mit einem Molekulargewicht von 3000 (Polyol B). Die folgenden Versuche a) und b) wurden in der in Beispiel 1 geschilderten Weise durchgeführt; es wurden dabei jeweils 200 g Polyol B vorgelegt, unter Stickstoff auf 120°C erhitzt und dann die folgenden Mischungen zudosiert:

| | Versuch a) | Versuch b) |
|---|---|---|
| Polyol B | 600 g | 600 g |
| Styrol | 90 g | 90 g |
| Acrylnitril | 110 g | 110 g |
| AIBN | 2 g | 2 g |
| Verbindung I | – | 2 g |

Versuch a) lieferte eine agglomeratfreie Dispersion mit einer Viskosität von 5500 mPa · s bei 23°C. Dagegen besaß das Produkt aus Versuch b) eine Viskosität von nur 1500 mPa · s. Der Polymergehalt wurde in beiden Versuchen zu 19,7% bestimmt.

### Beispiel 3

Eine Mischung aus 80 g Polyol A und 120 g des kurzkettigen, trifunktionellen Polyols E wurde unter Stickstoff auf 120° C erhitzt. Zu dieser Mischung wurde ein Gemisch aus 200 g Polyol A, 300 g Polyol E, 120 g Styrol, 180 g Acrylnitril, 3 g AIBN und 1,5 g Verbindung II dosiert. Das resultierende Produkt war agglomeratfrei und sedimentationsstabil und besaß eine Viskosität von 6000 mPa · s bei 23° C. Zum Vergleich wurde der Versuch ohne den Zusatz von Verbindung II wiederholt. Das Produkt zeigte in diesem Fall eine Viskosität von 17 000 mPa · s. In einem weiteren Versuch wurde die zugesetzte Menge an Verbindung II auf 3 g erhöht. Dadurch wurde die Viskosität der entsprechenden Dispersionen weiter erniedrigt, und zwar auf einen Wert von 3900 mPa · s. Die beiden unter Verwendung von Verbindung II hergestellten Dispersionen wurden mit Trichlorfluormethan und üblichen Hilfs- und Zusatzstoffen zu einer stabilen Polyolkomponente formuliert, die in einem mit Kolbenpumpen ausgerüsteten Zweikomponentendosieraggregat mit Hochdruckmischkopf mit einem technischen Polymethylenpolyphenylisocyanat vermischt wurde, das durch Kondensation von Anilin mit Formaldehyd und Phosgenierung des Kondensationsproduktes hergestellt worden war. Die Formulierung ließ sich einwandfrei mit reproduzierbarer Genauigkeit fördern und dosieren und lieferte Integralhartschaumformteile von guter Qualität, die frei von Fließstörungen waren.

### Beispiel 4

Eine Mischung von 100 g Styrol, 200 g Acrylnitril, 0,9 g AIBN und 3 g der Verbindung II wurde in ein auf 100° C erhitztes Gemisch von 240 g Polyol A und 360 g Polyol E eingetropft. Das Produkt besaß eine Viskosität von 1400 mPa · s, während der gleiche Versuch ohne den Zusatz von Verbindung II einen zähen Brei mit einer Viskosität von 80 000 mPa · s lieferte.

### Beispiel 5

Folgende Mischungen wurden bei 125° C unter Durchleiten eines schwachen Stickstoffstroms in jeweils 200 g des Polyols A eingetropft:

| | Versuch a) | Versuch b) | Versuch c) |
|---|---|---|---|
| Polyol A | 500 g | 500 g | 500 g |
| Styrol | 120 g | 120 g | 120 g |
| Acrylnitril | 180 g | 180 g | 180 g |
| AIBN | 3 g | 3 g | 3 g |
| Verbindung I | 3 g | – | – |
| Verbindung II | – | 3 g | – |
| Verbindung III | – | – | 3 g |

Nach dem Entgasen im Vakuum wurden folgende Eigenschaften bestimmt:

| | a) | b) | c) |
|---|---|---|---|
| Viskosität bei 23°C (mPa · s) | 4000 | 3500 | 4100 |
| Polymergehalt (%) | 28.3 | 28.2 | 28.3 |

Der gleiche Versuch, durchgeführt ohne Zusatz einer der erfindungsgemäßen Verbindungen, lieferte eine von groben Agglomeratteilchen durchsetzte Dispersion mit einer Viskosität von 70 000 mPa · s bei einem Polymergehalt von 28,5%.

Beispiel 6

Die Vorteile der Verwendung von höherkonzentrierten Polymerpolyoldispersionen werden durch folgenden Vergleich demonstriert:

50 Teile eines handelsüblichen, zur Herstellung superelastischer Polyurethan-Weichschaumstoffe verwendeten Polymerpolyols mit einem Feststoffgehalt von 19,8% wird mit 50 Teilen eines auf Trimethylolpropan gestarteten Polyoxypropylentriols mit 13% endständigen Polyoxyäthylensequenzen, einer OH-Zahl von 28 und einem primären OH-Gruppenanteil von über 70% vermischt (Mischung A). Eine analoge Mischung wird unter Verwendung des Polymerpolyols b) aus Beispiel 5 hergestellt (Mischung B). Die beiden Mischungen wurden nach folgender Rezeptur zu einem frei aufsteigenden hochelastischen Weichschaum verarbeitet:

| | Schaum 1 | Schaum 2 |
|---|---|---|
| Mischung A | 100 Teile | – |
| Mischung B | | 100 Teile |
| Wasser | 2,7 Teile | 2,7 Teile |
| Triäthylendiamin | 0,15 Teile | 0,15 Teile |
| Bis-N,N-dimethylaminoäthyläther | 0,08 Teile | 0,08 Teile |
| N-Methylmorpholin | 0,8 Teile | |
| Silikonöl | 1,0 Teile | 1,0 Teile |
| Polyäther-Polysiloxan-Schaumstabilisator | 0,1 Teile | 0,1 Teile |
| Polyisocyanatgemisch aus 80% Toluylendiisocyanat und 20% technischem Polymethylen-polyphenylisocyanat | Kennzahl 100 | Kennzahl 100 |

An den erhaltenen Schaumstoffen wurden folgende mechanische Eigenschaften gemessen:

| | Schaum 1 | Schaum 2 |
|---|---|---|
| Rohdichte nach DIN 53 420 (kg/m$^3$) | 45 | 45 |
| Zugfestigkeit nach DIN 53 571 (kPa) | 122 | 147 |
| Bruchdehnung (%) | 122 | 118 |
| Stauchhärte nach DIN 53 577 (kPa) | 4.7 | 5.3 |
| Weiterreißfestigkeit nach ASTM D 1564 (kN/m) | 0.36 | 0.43 |
| Druckverformungsrest nach DIN 53 572 (%) 22 Stunden bei 70°C | | |
| 50% Kompression | 3.6 | 3.9 |
| 90% Kompression | 5.3 | 5.4 |

Man beobachtet bei Verwendung des höherkonzentrierten Polymerpolyols und gleichem Raumgewicht eine Zunahme der Zugfestigkeit um ca. 20%, einen Gewinn an Stauchhärte von ca. 15% und eine Zunahme der Weiterreißfestigkeit um ca. 20%, während Bruchdehnung und Druckverformungsrest im Rahmen der Meßgenauigkeit konstant bleiben.

Beispiel 7

In einem 100-l-Rührkessel aus Edelstahl, der mit einem Heizmantel, einem Rückflußkühler, einem Ankerrührer und einer über ein kühlbares Vorratsgefäß zu beschickenden Dosiervorrichtung ausgestattet ist, werden 12 kg des Polyols A unter einer Stickstoffatmosphäre auf 120°C erhitzt. Über zwei Tropfgefäße von je 10 l Inhalt, die abwechselnd durch Anlegen von Vakuum aus dem Vorratstank beschickt werden, läßt man nun eine Mischung aus 44 kg Polyol A, 9,6 kg Styrol, 14,4 kg Acrylnitril, 240 g AIBN (1,0%, bezogen auf Monomere) und 60 g der Verbindung I (0,25%, bezogen auf Monomere), im Laufe von 5 Stunden zulaufen (Dosiergeschwindigkeit: 14,5 l/Std.), wobei die Rührgeschwindigkeit so eingestellt wird, daß ein Hochspritzen des Reaktionsguts an der Kesselwand vermieden wird. Im Laufe der Zugabe steigt die Innentemperatur infolge der freiwerdenden Reaktionswärme geringfügig an und wird durch gelegentliches Zuschalten eines Kühlkreislaufs unter 125°C gehalten. Nach beendeter Zugabe wird noch 2 Stunden lang weitergerührt und anschließend ein Vakuum von 2 Torr erzeugt, wodurch alle flüchtigen Anteile über einen absteigenden Kühler in eine auf −78°C gekühlte Vorlage mit zwei nachgeschalteten Kühlfallen abdestilliert werden. Die Gesamtmenge des Destillats beträgt 920 g, das entspricht einem Monomerenumsatz von 96,2% und einem Gehalt an polymerisiertem Styrol und Acrylnitril von 29,2%. Das Produkt stellt eine fast weiße, vollständig filtrierbare Dispersion mit einer Viskosität von 2800 mPa · s bei 25°C dar. Eine Sauerstoffanalyse des abgetrennten und erschöpfend mit Methanol extrahierten Feststoffs ergibt einen Wert von 2,3%. Dies entspricht einem Gehalt an eingebautem Ausgangspolyäther von 7,8%, woraus sich für die Dispersion ein Feststoffgehalt von 31,7% und eine theoretiche OH-Zahl von 23,9 errechnet. Gefunden wird eine OH-Zahl von 23,5. Bei der Wiederholung des Versuchs ohne den Zusatz der Verbindung I entstand eine dickflüssige, von Stippen und gröberen Agglomeratteilchen durchsetzte Dispersion mit einer Viskosität von 35 000 mPa · s.

**Patentansprüche**

1. Verfahren zur Herstellung von modifizierten Polyätherpolyolen durch radikalische Polymerisation von 1−50 Gewichtsteilen eines Gemisches aus 20−100 Gew.-% (bezogen auf Gesamtmenge an Monomeren) Acrylnitril und 0−80 Gew.-% Styrol sowie gegebenenfalls weiteren, copolymerisierbaren Comonomeren in untergeordneten Mengen, in 50−99 Gewichtsteilen eines Polyätherpolyols in Gegenwart eines Radikale liefernden Polymerisationsinitiators, dadurch gekennzeichnet, daß man die Polymerisation in Gegenwart von 0,1−1,5 Gew.-%, bezogen auf die eingesetzten Monomeren, einer Verbindung der allgemeinen Strukturformel

A=CH−X−R

durchführt, in welcher
A einen der zweiwertigen Reste

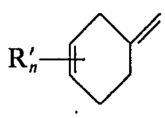 oder 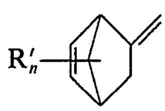

bedeutet,
R für einen $C_{1-18}$-Alkyl-, Cycloalkyl- oder gegebenenfalls substituierten Benzylrest,
R′ für einen $C_{1-8}$-Alkylrest,
n für 0, 1 oder 2 und
X für −O− oder −S− stehen.

2. Verfahren nach Anspruch 1, dadurch gekennzeichnet, daß die Temperatur bei der Polymerisation zwischen 100 und 140°C liegt.

3. Verfahren nach Anspruch 1 und 2, dadurch gekennzeichnet, daß Verbindungen verwendet werden, in denen n=0 oder 1 ist, R für einen Methylrest und R′ für einen $C_1-C_6$-Alkylrest, einen Benzyl- oder Cyclohexylrest stehen.

4. Verfahren nach Anspruch 1−3, dadurch gekennzeichnet, daß die Verbindung

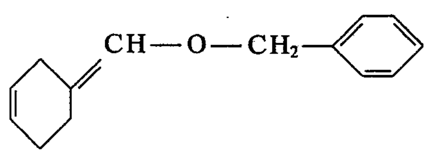

verwendet wird.

5. Verfahren nach Anspruch 1–3, dadurch gekennzeichnet, daß die Verbindung

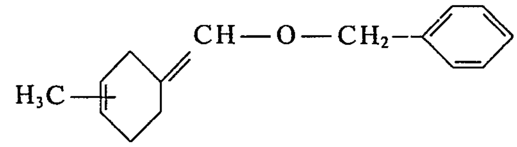

verwendet wird.

6. Verfahren nach Anspruch 1–3, dadurch gekennzeichnet, daß die Verbindung

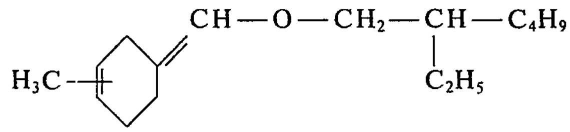

verwendet wird.

7. Verfahren zur Herstellung von gegebenenfalls zellförmigen Polyurethankunststoffen durch Umsetzung von

A) Polyisocyanaten mit
B) durch Pfropfpolymerisation modifizierten Polyätherpolyolen sowie gegebenenfalls
C) weiteren höhermolekularen und/oder niedermolekularen, gegenüber Isocyanaten reaktive Wasserstoffatome enthaltenden Verbindungen, gegebenenfalls in Gegenwart von
D) Treibmitteln, Katalysatoren und weiteren an sich bekannten Zusatzstoffen,

dadurch gekennzeichnet, daß als Komponente B) gemäß Anspruch 1 bis 6 hergestellte Polymerpolyole eingesetzt werden.

## Claims

1. A process for the production of modified polyether polyols by the radical polymerisation of from 1 to 50 parts by weight of a mixture of from 20 to 100% by weight (based on the total quantity of monomers) of acrylonitrile and from 0 to 80% by weight of styrene and, optionally, other copolymerisable monomers in small quantities in 50 to 99 parts by weight of a polyether polyol in the presence of a radical-forming polymerisation initiator, characterised in that polymerisation is carried out in the presence of form 0.1 to 1.5% by weight, based on the monomers used, of a compound having the following general structural formula

$$A{=}CH{-}X{-}R$$

in which

A represents one of the difunctional radicals

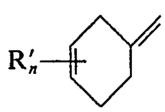

or

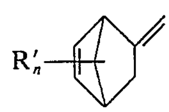

R represents a $C_{1-18}$-alkyl, cycloalkyl or optionally substituted benzyl radical,
R' represents a $C_{1-8}$-alkyl radical,
n 0, 1 or 2 and
X represents $-O-$ or $-S-$.

2. A process as claimed in Claim 1, characterised in that the polymerisation temperature is in the range from 100 to 140° C.

3. A process as claimed in Claims 1 and 2, characterised in that compounds are used in which $n=0$ or 1, R is a methyl radical and R' is a $C_1-C_6$-alkyl radical, a benzyl or cyclohexyl radical.

4. A process as claimed in Claims 1 to 3, characterised in that the compound

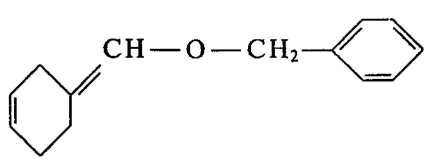

is used.

5. a process as claimed in Claims 1 to 3, characterised in that the compound

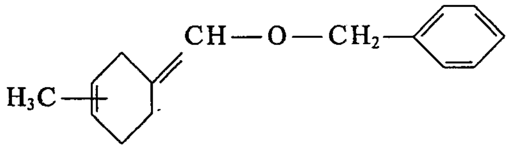

is used.

6. A process as claimed in Claims 1 to 3, characterised in that the compound

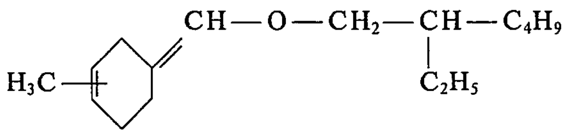

is used.

7. A process for the production of optionally cellular polyurethane plastics by reacting

A) polyisocyanates with
B) polyether polyols modified by graft polymerisation and optionally
C) other relatively high molecular weight and/or low molecular weight compounds containing isocyanatereactive hydrogen atoms, optionally in the presence of
D) blowing agents, catalysts and other additives known per se,

characterised in that polymer polyols produced in accordance with Claims 1 to 7 are used as component B).

**Revendications**

1. Procédé de fabrication de polyéther-polyols modifiés par polymérisation radicalaire de 1−50 parties en poids d'un mélange à 20−100% en poids (par rapport à la quantité totale des monomères) d'acrylonitrile et à 0−80% en poids de styrène et éventuellement d'autres comonomères copolymérisables en quantités mineures, dans 50−99 parties en poids d'un polyéther-polyol en présence d'un initiateur de polymérisation fournissant des radicaux, caractérisé en ce qu'on exécute la polymérisation en présence de 0,1−1,5% en poids, par rapport aux monomères mis en jeu, d'un composé de formule de structure générale:

$$A=CH-X-R$$

dans laquelle
A signifie un des radicaux bivalents

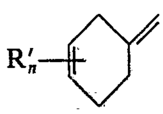 ou 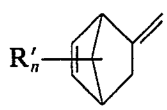

R un radical alcoyle en $C_{1-18}$, cycloalcoyle ou benzyle éventuellement substitué,
R' un radical alcoyle en $C_{1-8}$,
n 0, 1 ou 2 et
X −O− ou −S−.

2. Procédé selon la revendication 1, caractérisé en ce que la température lors de la polymérisation se situe entre 100° C et 140° C.

3. Procédé selon les revendications 1 et 2, caractérisé en ce qu'on utilise des composés dans lesquells n=0 ou 1, R représente un radical méthyle et R' un radical alcoyle en $C_1-C_6$, un radical benzyle ou cyclohexyle.

4. Procédé selon les revendications 1 à 3, caractérisé en ce qu'on utilise le composé:

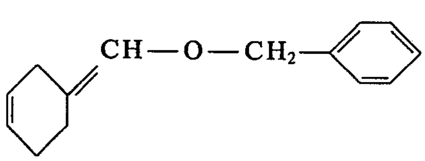

5. Procédé selon les revendications 1 à 3, caractérisé en ce qu'on utilise le composé:

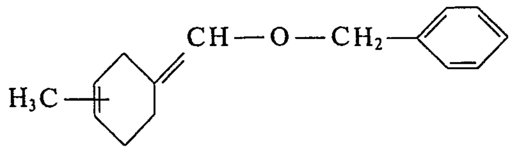

6. Procédé selon les revendications 1 à 3, caractérisé en ce qu'on utilise le composé:

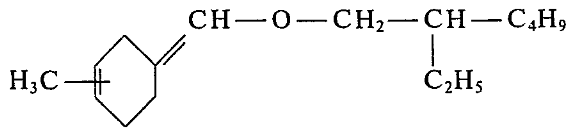

7. Procédé de fabrication de matières plastiques de polyuréthanes éventuellement cellulaires par réaction

A) des polyisocyanates avec
B) des polyéther-polyols modifiés par une polymérisation avec greffage, de même éventuellement qu'avec
C) d'autres composés à poids moléculaire élevé et/ou à bas poids moléculaire contenant des atomes d'hydrogène réactifs envers les isocyanates, éventuellement en présence
D) d'agents expanseurs, de catalyseurs et d'autres additifs connus en eux mêmes, caractérisé en ce qu'on utilise comme composants B) des polymère-polyols préparés selon les revendications 1 à 7.